(19) Europäisches Patentamt
European Patent Office
Office européen des brevets

(11) EP 2 094 761 B1

(12) **EUROPÄISCHE PATENTSCHRIFT**

(45) Veröffentlichungstag und Bekanntmachung des Hinweises auf die Patenterteilung:
**03.10.2012 Patentblatt 2012/40**

(21) Anmeldenummer: **07821995.3**

(22) Anmeldetag: **30.10.2007**

(51) Int Cl.:
***C08G 65/336*** *(2006.01)* ***C08G 77/46*** *(2006.01)*
***C08L 83/12*** *(2006.01)*

(86) Internationale Anmeldenummer:
**PCT/EP2007/061641**

(87) Internationale Veröffentlichungsnummer:
**WO 2008/064965 (05.06.2008 Gazette 2008/23)**

(54) **POLYOXYALKYLEN-POLYSILOXAN-BLOCKPOLYMERISATE, EIN VERFAHREN ZU DEREN HERSTELLUNG UND IHRE VERWENDUNG ALS ENTSCHÄUMER IN WÄSSRIGEN DISPERSIONEN**

POLYOXYALKYLENE-POLYSILOXANE BLOCK POLYMERS, METHOD FOR PRODUCING THEM AND THEIR USE AS ANTIFOAMING AGENTS IN AQUEOUS SOLUTIONS

POLYMÈRES SÉQUENCÉS DE POLYOXYALKYLÈNE ET DE POLYSILOXANE, PROCÉDÉ DE PRODUCTION DE CES POLYMÈRES ET LEUR UTILISATION COMME AGENTS ANTIMOUSSES DANS DES DISPERSIONS AQUEUSES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.11.2006 DE 102006056305**

(43) Veröffentlichungstag der Anmeldung:
**02.09.2009 Patentblatt 2009/36**

(73) Patentinhaber: **Evonik Goldschmidt GmbH**
**45127 Essen (DE)**

(72) Erfinder:
- **ESSELBORN, Eberhard**
  **45147 Essen (DE)**
- **SCHNELLE, Ralf**
  **78166 Donaueschingen (DE)**
- **SUCKER, Roland**
  **59368 Werne (DE)**
- **KLOCKER, Otto**
  **45277 Essen (DE)**

(56) Entgegenhaltungen:
**DE-C1- 3 807 247**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Polyoxyalkylen-Polysiloxan-Blockpolymerisate, ein Verfahren zu deren Herstellung und ihre Verwendung als Entschäumer in wässrigen Dispersionen.

Entschäumer zur Entschäumung wässriger und nichtwässriger Medien, die als die Entschäumung maßgeblich beeinflussenden Wirkstoff linear strukturierte Polyoxyalkylen-Polysiloxan-Blockcopolymere enthalten, zeigen eine besondere Wirksamkeit und Stabilität. Dazu zählen sowohl die Schauminhibierung, die Entschäumung, eine sehr gute Langzeitstabilität, als auch die hervorragende Verträglichkeit in wässrigen und nicht wässrigen Medien. Alle diese Faktoren sind für moderne Verfahren im Bereich Oberflächentechnik von großer Wichtigkeit.

Der Begriff Entschäumer umfasst im vorliegenden Fall sowohl Produkte als auch Formulierungen, die Schaum verhindern, als auch solche, die Schaum zerstören sowie eine Entlüftung ermöglichen. In der Praxis sind die Übergänge zwischen diesen Produkten fließend, so dass hier der gemeinsame Sammelbegriff Entschäumer verwendet wird.

In vielen technischen Verfahren, insbesondere, wenn in wässrigen Medien gearbeitet wird, ist es notwendig, die unerwünschte Bildung von Schaum während der Herstellungs - oder Verarbeitungsprozesse zurückzudrängen oder ganz zu unterbinden, da Schaum bzw. Schaumkronen, die sich bei Rühr - und Dispergiervorgängen oder in den Gebinden während des Abfüllvorganges ansammeln, die Produktionszeiten verlängern oder aber das Effektivvolumen der Anlage vermindern bzw. deren korrekte Arbeit sogar verhindern können (Überlaufen, fehlende Farbübertragung).

Dies kann erreicht werden, indem man Entschäumer hinzugibt, die schon bei sehr geringen Einsatzkonzentrationen ab etwa 0,001 Gew.- in der Lage sind, unerwünschte Schäume zu vermeiden oder zu zerstören und gleichzeitig nach der Applikation der Systeme keine Oberflächenstörungen hervorzurufen. In der Praxis muss dieser letztere Faktor mindestens ebenso berücksichtigt werden wie eine gute Entschäumung.

Unter Oberflächenstörungen sind für den Anwender unerwünschte Eigenschaften wie beispielsweise Pinholes, Krater, Glanzverlust, Orangenschaleneffekt, Runzelbildung und Haftungsverlust im Beschichtungssystem zu verstehen. Für den Anwender ist aber auch eine entsprechende Langzeitstabilität der Formulierungen sehr wichtig, da oftmals Produkte wie Farben nicht umgehend, sondern mitunter erst nach längerer Lagerung verbraucht werden. Bei Lagerung unter extremen klimatischen Bedingungen (Hitze) kann mitunter die Wirksamkeit einer Entschäumerformulierung schon nach kurzer Zeit zusammenbrechen.

Dem Stand der Technik gemäße Entschäumer sind zum Beispiel Öle wie Silikonöle, native Öle, Paraffin- und Mineralöle, aber auch hydrophobe Polyoxyalkylene, langkettige Alkohole sowie Mischungen dieser Produkte untereinander und Emulsionen daraus.

Zur Verstärkung der Wirksamkeit werden häufig noch sogenannte hydrophobe Festkörper in Mengen von 0,1 bis 10 Gew.-% zugegeben, die Entnetzungsvorgänge gezielt an Schaumlamellen fördern und somit den Schaumzusammenbruch sehr wirksam unterstützen. Geeignete hydrophobe Festkörper sind entsprechende Kieselsäuren, Metallstearate, Polyolefine und natürliche oder synthetische Wachse wie Paraffinwachse, Polyolefinwachse und Amidwachse.

Durch Zusatz geeigneter Emulgatoren können solche Entschäumerformulierungen auch in wässrige Emulsionen überführt werden.

Es ist ebenfalls bekannt, Polyoxyalkylen-Polysiloxan-Blockmischpolymerisate als Entschäumungsmittel zu verwenden. So ist beispielsweise in der DE 10 12 602 angegeben, dass wasserlösliche Blockmischpolymerisate der allgemeinen Formel

$$R'[(R_2SiO)_y]_a[(C_nH_{2n}O)_x]_bR''$$

worin bedeuten

| | |
|---|---|
| R' und R" = | einwertige Kohlenwasserstoffe oder Kohlenwasserstoffoxyreste |
| y = | eine ganze Zahl von mindestens 2, |
| n = | eine ganze Zahl von 2 bis 4, |
| x = | mindestens 5 |

und die Summe von

a und b = 2 oder 3 ist,

u.a. als Antischaummittel eingesetzt werden können. Die in der DE 10 12 602 beschriebenen Polyoxyalkylen-Polysiloxan-Blockmischpolymerisate können dabei die Struktur A'B'A' aufweisen, wobei mit A' die Polyoxyalkylenblöcke und mit B' ein Polysiloxanblock bezeichnet ist.

In der DE 24 43 853 werden entschäumend wirkende Zubereitungen beschrieben, die neben linearen auch

verzweigte Polyoxyalkylen-Polysiloxan-Blockcopolymere enthalten. Dabei kann die lineare Komponente des Gemisches wie folgt beschrieben werden:

$$RO\text{-}A(BA)_n\text{-}R$$

worin bedeuten

A = Polyoxyalkyleneinheiten,
B = Polysiloxangruppen $[-(CH_3)_2SiO-]$ und
R = die das Polymer beschließende Endgruppen sind. Diese sind in den dargelegten Fällen vorzugsweise Wasserstoff oder kurze Alkylgruppen ($C_{1-4}$), teilweise sind auch Acylgruppen mit $C_2$ bis $C_{12}$ beschrieben.

In der US 4,028,218 ist ein Verfahren zum Verhindern bzw. Zerstören von Schaum in wässrigen Lösungen oder Dispersionen beschrieben, wobei man sich einer ähnlichen Zubereitung, wie sie in der DE 24 43 853 beschrieben ist, bedient. Die Zubereitung unterscheidet sich im Wesentlichen durch einen zusätzlichen Gehalt an organischem Öl, welches ebenfalls entschäumend wirkt.

Geeignete organische Öle sind die Ester von Alkoholen und Fettsäuren, wie z.B. pflanzliche oder tierische Öle, oder Mineralöle, Polybutadienöle oder Polypropylenglykole.

Der US 4,028,218 vergleichbar ist in der DE 31 23 103 die Verwendung eines von mineralischen Oxiden freien Gemisches aus:

A) 1 bis 20 Gew.-% mindestens eines Polydimethylsiloxan-Polyoxyalkylen-Blockpolymerisates, das zu 10 bis 60 Gew.-%, vorzugsweise 15 bis 40 Gew.-%, aus Methylsiloxaneinheiten und zu 90 bis 40 Gew.-%, vorzugsweise 85 bis 60 Gew.-%, aus Oxyalkyleneinheiten besteht, wobei die Oxyalkyleneinheiten zu 75 bis 100 % aus Oxypropyleneinheiten und zu 0 bis 25 % aus Oxyethyleneinheiten bestehen;

B) 99 bis 80 Gew.-% mindestens eines neutralen Carbonsäureesters aus gesättigten oder ungesättigten, geradkettigen oder verzweigten, 4 bis 12 Kohlenstoffatome aufweisenden Mono- oder Dicarbonsäuren und verzweigten, 4 bis 12 Kohlenstoffatome aufweisenden Monoalkoholen

als Entschäumer in wässrigen Kunstharzdispersionen.

Die in einer Menge von 1 bis 20 Gew.-% in dem Gemisch enthaltenden Polyoxyalkylen-Polysiloxan-Blockmischpolymerisate können dabei die Struktur $A'\text{-}[B'\text{-}A']_z$ aufweisen, wobei z einen Wert von 1 bis 3 annehmen kann.

Diese aus dem Stand der Technik bekannten Silikonöle oder Polyoxyalkylen-Polysiloxan-Blockmischpolymerisate enthaltenden Zubereitungen sind in mehr oder weniger ausgeprägtem Umfang geeignet, die Schaumbildung von wässrigen Lösungen oder wässrigen Dispersionen zu verhindern oder bereits gebildeten Schaum zu zerstören. Es hat sich jedoch gezeigt, dass mit derartigen Zubereitungen versetzte wässrige Dispersionen durch den Zusatz solcher Entschäumungsmittel anwendungstechnische Nachteile aufweisen. Es hat sich insbesondere gezeigt, dass Dispersionen von Bindemitteln, Beschichtungsmitteln und Klebemitteln, welchen zur Entschäumung Polysiloxane oder Polyoxyalkylen-Polysiloxan-Blockmischpolymerisate zugesetzt worden sind, beim Aufbringen auf Oberflächen Benetzungsfehler aufweisen. Diesem Nachteil begegnet die DE 38 07 247 durch die Verwendung von Polyoxyalkylen-Polysiloxan-Blockmischpolymerisaten, in denen der Polyoxyalkylenblock der durchschnittlichen Formel $(C_nH_{2n}O\text{-})_y$ aus Oxyethylen-, Oxypropylen - und/oder Oxybutyleneinheiten so aufgebaut ist, dass n dabei einen Wert von 2,8 bis 4,0 einnimmt.

Es zeigt sich jedoch weiterhin, dass Dispersionen von Bindemitteln, Beschichtungsmitteln und Klebemitteln, welchen zur Entschäumung die zuvor genannten Polysiloxane oder Polyoxyalkylen-Polysiloxan-Blockmischpolymerisate zugesetzt worden sind, oftmals eine nicht ausreichende Lagerstabilität aufweisen. Nun ist aber bei Farben und Lacken dieser Parameter ganz wesentlich, da Produkte vor der Herstellung bis zu mehreren Monaten gelagert werden, und das bei Temperaturbereichen von knapp über 0°C bis ca. 50°C.

Der vorliegenden Erfindung liegt deshalb die Aufgabe zugrunde, geeignete Polyoxyalkylen-Polysiloxan-Blockmischpolymerisate bereitzustellen, deren wässrige Dispersionen gute entschäumende Eigenschaften zeigen, gleichzeitig aber keine Benetzungsstörungen beim Auftragen auf eine Oberfläche verursachen und darüber hinaus eine verbesserte Lagerstabilität aufweisen.

Diese der Erfindung zugrunde liegende Aufgabe kann überraschenderweise gelöst werden, wenn Polyoxyalkylen-Polysiloxan-Blockpolymerisate der allgemeinen Formel (I)

$$C\text{-}B\text{-}(AB)_a\text{-}C^1 \qquad (I)$$

verwendet werden.

Ein Gegenstand der Erfindung sind daher Polyoxyalkylen-Polysiloxan-Blockpolymerisate der allgemeinen Formel (I)

$$C\text{-}B\text{-}(AB)_a\text{-}C^1 \qquad (I)$$

worin bedeuten

| | |
|---|---|
| A = | ein Polyoxyalkylenblock der allgemeinen Formel $-(C_nH_{2n}O)_b-$, |
| B = | ein Polysiloxanblock der allgemeinen Formel $-(SiR_2-O)-$, |
| C,$C^1$ = | gleiche oder verschiedene Alkoxypolyoxyalkylenreste der allgemeinen Formel $Z\text{-}O\text{-}[CH_2\text{-}CH(R^1)O]_d-$, |
| R = | gleiche oder verschiedene $C_{1-4}$-Alkylreste oder Phenylreste mit der Maßgabe, dass mindestens 90 % der Reste R Methylreste sind, |
| $R^1$ = | gleiche oder verschiedene Wasserstoff-, $C_{1-12}$-Alkylreste oder Phenylreste , |
| Z = | ein Alkyl-, Alkylen-, Aryl- oder Alkylarylrest, |
| a = | 1 bis 20, vorzugsweise 2 bis 10, |
| b = | einen mittleren Wert von 10 bis 130, vorzugsweise 20 bis 100, |
| c = | 3 bis 100, vorzugsweise 10 bis 80, |
| d = | unabhängig voneinander in C/$C^1$ Werte von 2 bis 20, vorzugsweise 2 bis 12 haben kann, mit der Maßgabe, dass der Mittelwert im Bereich 2 bis < 15, vorzugsweise 2 bis 12, insbesondere 5 bis 10 liegt, und worin d vorzugsweise ungleich b ist, |
| n = | 2 bis 12 mit einem mittleren Zahlenwert von 2,7 bis 4, 0. |

Ein weiterer Gegenstand der Erfindung ist die Verwendung der Polyoxyalkylen-Polysiloxan-Blockpolymerisate der allgemeinen Formel (I) zur Entschäumung von wässrigen Dispersionen.

Weitere Gegenstände der Erfindung sind durch die Ansprüche gekennzeichnet.

Die erfindungsgemäßen Polyoxyalkylen-Polysiloxan-Blockpolymerisate werden nach an sich bekannten Verfahren hergestellt durch Umsetzung der Alkoholkomponenten A und C, $C^1$ mit Chlorpolysiloxanen im Molverhältnisbereich von

A : C,$C^1$ von 3 bis 40, vorzugsweise von 3 bis 10,

(A + C,$C^1$ ) : Chlorpolysiloxanen von 1,3 bis 1,05, vorzugsweise von 1,3 bis 1,1,

bei Temperaturen von 50°C bis 150°C und anschließender Neutralisation mit Ammoniak.

Bei den Polyetheralkoholen handelt es sich bevorzugt um Polyetherdiole, Polyetherpolyole oder um Mischungen aus Polyetherdiolen und Polyetherpolyolen (Komponente A) sowie einem Polyethermonool (Komponente C, $C^1$).

Die Chlorpolysiloxane, basierend auf den Polyoxyalkylenblocksiloxanen B, sind linear .

Die Polyetheralkohole A werden hergestellt durch Anlagerung von Alkylenoxiden, erfindungsgemäß bevorzugt Ethylenoxid, Propylenoxid, an mehrwertige Starteralkohole der allgemeinen Formel

$$R^2\text{-}[O\text{-}H]_e$$

worin

| | |
|---|---|
| $R^2$ = | ein e-wertiger Kohlenwasserstoffrest und |
| e = | 2 bis 6, vorzugsweise 2 bis 3 sein kann, |

nach den im Stand der Technik bekannten Alkoxylierungsverfahren. Als Starteralkohole sind grundsätzlich alle geradkettigen oder verzweigten, mindestens zweiwertigen Alkohole verwendbar. Erfindungsgemäß bevorzugt sind zwei- und/oder dreiwertige Alkohole wie insbesondere die Ethandiol, Propandiol, Butandiol, Hexandiol, Trimethylolpropan, die allein oder als Mischung eingesetzt werden können.

Die Polyetheralkohole C, $C^1$ sind grundsätzlich in der gleichen Weise herstellbar wie die Polyetheralkohole A, mit der Abänderung, dass als Starteralkohole monofunktionelle Verbindungen Z-OH verwendet werden, worin Z ein gegebenenfalls verzweigter und/oder Mehrfachbindungen enthaltender Alkyl-, Alkylen-, Alkylaryl-, Arylrest mit 1 bis 20 C-Atomen, vorzugsweise 1 bis 10 C-Atomen, sein kann.

Der Polysiloxanblock entspricht der durchschnittlichen allgemeinen Formel

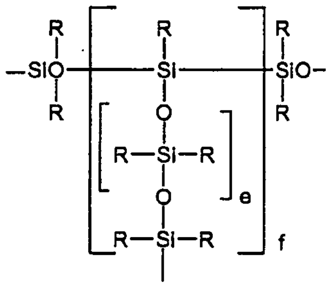

mit f=0. R kann innerhalb des Polysiloxanblocks gleiche oder unterschiedliche Bedeutung haben. R kann ein Alkylrest mit 1 bis 4 C-Atomen oder ein Phenylrest sein. Beispiele für Reste R sind der Methyl-, Ethyl-, Propyl-, n-Butyl- und i-Butylrest. Mindestens 90 % der Reste R sollen jedoch Methylreste sein, wobei solche Polysiloxanblöcke bevorzugt sind, bei denen alle Reste R Methylreste sind.

Entsprechend dem Stand der Technik ist es möglich, den erfindungsgemäß zu verwendenden Polyoxyalkylen-Polysiloxan-Blockmischpolymerisaten bezogen auf diese bis zu 20 Gew.-% anorganische oder organische feinteilige Feststoffe zuzusetzen. Beispiele anorganischer Feststoffe sind gegebenenfalls hydrophobierte Kieselsäure, Aluminiumoxid oder ähnliche aus dem Stand der Technik bekannte und übliche feinteilige Feststoffe. Als organische feinteilige Substanzen können die für diesen Zweck bekannten Erdalkalisalze von langkettigen Fettsäuren mit 12 bis 22 Kohlenstoffatomen oder die Amide dieser Fettsäuren verwendet werden. Weitere geeignete organische Feststoffe sind Derivate des Harnstoffs, die durch Umsetzung von Isocyanaten mit Aminen erhalten werden können.

Die erfindungsgemäßen Entschäumer weisen ein hervorragendes Entschäumungsvermögen gekoppelt mit sehr guter Langzeitstabilität der Entschäumung und einer sehr guten Verträglichkeit in der Beschichtungsformulierung auf und lassen sich bei einer Vielzahl von industriellen Prozessen, wie beispielsweise zur Entschäumung von Kühlschmierstoffen, Polymerdispersionen, Beschichtungen wie Farben, Lacken und Druckfarben, Klebstoffen, im Papierstrich usw., einsetzen.

Sie können den zur Schaumbildung neigenden Flüssigkeiten in einer Menge von ca. 0,05 bis 3 % direkt oder in gelöster Form, vorzugsweise aber als wässrige Emulsion, zugesetzt werden oder durch Auftropfen oder Aufsprühen des Entschäumers im Arbeitsbereich von Rührwerken und Pumpen. Bei Zugabe in reiner, nicht vordispergierter Form ist auf eine adäquate Einarbeitung zu achten.

Herstellungsbeispiele

Herstellung der Polyetherdiole

Die Herstellung der Polyetherdiole erfolgt in an sich bekannter Weise, wobei an einen Startalkohol verschiedene Alkylenoxide bei Temperaturen von 80°C bis 180°C in unterschiedlichen Mengenverhältnissen in Gegenwart eines Katalysators, insbesondere Kaliummethylat, angelagert werden. Nach der Polyadditionsreaktion werden die Polyether mit verdünnter Phosphorsäure neutralisiert und das gebildete Phosphat durch Entfernung des Wassers als Salz ausgefällt und abfiltriert. Die chemische Charakterisierung erfolgt durch Bestimmung der OH-Zahl.

Es wurden folgende Polyether-Diole und -Triole hergestellt (Tabelle 1):

Tabelle 1

| Polyether Nr. | Startalkohol | Epoxid | OHZ (mg KOH/g) | MG (g/mol) laut OHZ |
|---|---|---|---|---|
| P1 | Butandiol | Propylenoxid | 112 | 1000 |
| P2 | Propylenglykol | Propylenoxid | 73 | 1537 |
| P3 | Propylenglykol | 90 % Propylenoxid und 10 % Ethylenoxid | 52 | 2158 |
| P4 | Hexandiol | 80 % Propylenoxid und 20 % Ethylenoxid | 75 | 1496 |
| P5 | Butandiol | 50 % Propylenoxid und 50 % Butylenoxid | 61 | 1839 |

(fortgesetzt)

| Polyether Nr. | Startalkohol | Epoxid | OHZ (mg KOH/g) | MG (g/mol) laut OHZ |
|---|---|---|---|---|
| P6 | Propylenglykol | 70 % Propylenoxid und 15 % Styroloxid und 15 % Ethylenoxid | 55 | 2040 |
| P7 | Trimethylolpropan | Propylenoxid | 109 | 1544 |

Herstellung der Polyether-Monoole

Die Herstellung der Polyethermonoole erfolgt in der gleichen Art und Weise wie bei den Polyether-Diolen beschrieben, jedoch mit dem Unterschied, dass ausschließlich Monoole als Startalkohole verwendet werden (Tabelle 2).

Tabelle 2

| Polyether Nr. | Startalkohol | Epoxid | OHZ (mg KOH/g) | MG (g/mol) laut OHZ |
|---|---|---|---|---|
| K1 | Butanol | Propylenoxid | 132 | 425 |
| K2 | Allylalkohol | 80 % Propylenoxid und 20 % Ethylenoxid | 108 | 520 |
| K3 | 2,2,4-Trimethyl-hexanol-1 | 50 % Propylenoxid und 50 % Butylenoxid | 110 | 510 |
| K4 | Butanol | Propylenoxid | 86 | 650 |
| K5 | Octanol | 80 % Propylenoxid und 20 % Styroloxid | 70 | 800 |
| K6 | Methanol | 85 % Propylenoxid und 15 % Ethylenoxid | 154 | 365 |
| K7 | Butanol | Propylenoxid | 226 | 248 |

Herstellung der Chlorpolysiloxane

Die Herstellung der linearen Chlorpolysiloxane erfolgt in an sich bekannter Weise, wobei eine Mischung aus den Cyclen D4 und D5 in einem bestimmten Mengenverhältnis mit Dimethyldichlorsilan evtl. unter Zugabe von Wasser zur Steuerung der Kettenlänge gemischt werden und im Weiteren durch Zusatz eines sog. Äquilibrierungskatalysators, wie z.B. Schwefelsäure, Methansulfonsäure, Trifluormethansulfonsäure oder Eisen (III)-chlorid, äquilibriert werden. Bei dieser Reaktion bildet sich ein Gleichgewicht aus den Cyclen und einem chlorfunktionellen Dimethylpolysiloxan. Dieses Reaktionsgemisch kann sofort für die weitere Umsetzung verwendet werden. Im Falle der Verwendung von Eisen (III)-chlorid als Katalysator ist jedoch eine vorherige Entfernung des Katalysators mit Aktivkohle zu empfehlen, um unerwünschte Verfärbungen durch die Anwesenheit des Eisenkatalysators auszuschließen. Im Falle der Verwendung von linearen Chlor-Polysiloxanen wird die Methode mit Eisen(III)-chlorid bevorzugt. Die chemische Charakterisierung erfolgt durch Bestimmung des Säurewertes. Die Maßeinheit wird angegeben in Säureäquivalenten pro kg Chlordimethylpolysiloxan (Tabelle 3).

Tabelle 3

| Chlorsiloxan Nr. | Einsatzmenge Dimethyldichlorsilan [g] | Einsatzmenge Methyltrichlorsilan [g] | Einsatzmenge D4/D5 [g] | Säurewert [Säureäquivalente pro kg] |
|---|---|---|---|---|
| S1 | 27,2 | - | 220 | 1,61 |
| S2 | 129 | - | 629 | 2,53 |
| S3 | 65 | - | 783 | 1,11 |
| S4 | 32,3 | - | 787 | 0,59 |

Herstellung der erfindungsgemäßen Polyetherpolysiloxane

Herstellungsvorschrift

In einen 1 Liter Vierhalskolben mit Rührer, Thermometer, Destillationsbrücke und Gaseinleitungsrohr werden 250 g Polyetherdiol P1 zusammen mit 21,3 g des Polyethers K1 vorgelegt. Die Mischung der Polyoxyalkylenoxide wird sodann auf 110°C unter Einleiten von trockenem Stickstoff erhitzt. Nach Erreichen der gewünschten Temperatur wird die Anlage unter Verwendung einer Ölrotationsvakuumpumpe evakuiert und mittels Einleiten von Stickstoff ein Vakuum von ca. 10 mm eingestellt. Nach 1 Stunde beträgt der Wassergehalt des Gemisches <0,02 % und ist somit für die Reaktion mit dem Chlorpolysiloxan vorbereitet. Der Ansatz wird auf 50°C abgekühlt.

In einen bei 100°C vorgetrockneten Tropftrichter mit Gasausgleich, Gaseinleitungsröhrchen und oben aufsitzendem Trockenrohr werden unter Stickstoffgegenstrom 248,5 g des Chlorpolysiloxans S1 mittels einer Spritze unter inerten Bedingungen eingewogen. Die Destillationsvorrichtung wird nun gegen diesen Tropftrichter ausgetauscht und das Chlorpolysiloxan innerhalb von 30 Minuten zugetropft. Durch Einleiten von Ammoniak wird die Reaktion beschleunigt und es fällt Ammoniumchlorid aus. Nach 1 Stunde wird der Ansatz auf 80°C erhitzt und das Einleiten von Ammoniak so lange fortgesetzt, bis eine Probe auf feuchtem pH-Papier keine Spuren von Säure mehr zeigt. Sodann wird der Tropftrichter wieder gegen die Destillationsbrücke ausgetauscht und durch Anlegen eines Vakuums von ca. 133 Pa der überschüssige, gelöste Ammoniak aus dem Reaktionsgemisch entfernt. Nach dem Abkühlen auf Raumtemperatur wird der Ansatz filtriert. Man erhält ein flüssiges, klares, farbloses Endprodukt mit einer Viskosität bei Raumtemperatur nach Höppler von ca. 2000 mPas.

In Anlehnung an obiger Herstellungsvorschrift können die in der Tabelle 4 aufgelisteten Produkte erhalten werden.

| Beispiel PES Nr. | Polyether Nr. | Polyether mol (*) | Polyether g | Polyether Nr. | Polyether mol | Polyether g | Cl-Siloxan Nr. | Cl-Siloxan mol | Cl-Siloxan g |
|---|---|---|---|---|---|---|---|---|---|
| Vergleich PES1 | P3 | 5 | 333,4 | - | - | - | S1 | 4 | 153,5 |
| PES2 | P5 | 5 | 177,2 | K5 | 2,5 | 38,9 | S3 | 6 | 212,1 |
| PES3 | P6+ P7 | 8 + 2 | 229,4 +43,4 | K6 | 2 | 33,7 | S1 | 9 | 157,1 |
| PES4 | P3 | 5 | 333,4 | K1 | 1,5 | 19,6 | S1 | 4 | 153,5 |

Weitere mögliche Polyethersiloxane

| | | | | | | | | | |
|---|---|---|---|---|---|---|---|---|---|
| PES5 | P2 | 10 | 306 | K2 | 2 | 20,7 | S2 | 11 | 173,0 |
| PES6 | P4 | 10 | 272,2 | K4 | 1 | 11,8 | S3 | 9 | 294,8 |
| PES7 | P3 | 4 | 374,0 | K7 | 1 | 10,7 | S1 | 4 | 215,2 |
| | | | | | | | | | |
| PES9 | P3 | 3 | 257,9 | K4 | 2 | 51,8 | S1 | 4 | 197,9 |
| PES10 | P1 | 10 | 243,1 | K3 | 3 | 37,2 | S1 | 11 | 332,1 |
| (*)Anmerkung:<br>Die mol-Angaben geben das Molverhältnis der Komponenten untereinander an.<br>Die Grammangaben geben die tatsächliche Einwaage an. | | | | | | | | | |

Für die Überprüfung wurden die Polyethersiloxane mit disperser, hydrophobierter Kieselsäure (3 Gew.-%) versetzt und unter Verwendung von nichtionogenen Emulgatoren (Mischung aus Polyoxyethylenfettalkoholether und Polyoxyethylentriglycerid mit einem Mischungs-HLB von 13) in eine 20 ziege wässrige Entschäumeremulsion überführt.

Prüfung der erfindungsgemäßen Produkte I

Die geprüften Emulsionen (Beispiel E 1 bis E 4) wurden mit den Polyethersiloxanen gemäß Tabelle 5 gefertigt.

Tabelle 5

| Emulsion | Polyethersiloxan |
|---|---|
| Beispiel E 1 | PES 1 |
| Beispiel E 2 | PES 2 |
| Beispiel E 3 | PES 3 |
| Beispiel E 4 | PES 4 |

Prüfung in Papierstreichfarbe

Bei 20°C werden 100 g der Papierstreichfarbe Unilabel T der Fa. SICPA S.A. Germany, 71522 Backnang, welche mit 0,2 % Entschäumer versetzt wurde, in ein 250 ml Becherglas (6 cm Durchmesser) gegeben und mit einem Turbinenrührer (4 cm Durchmesser) 1 Minute lang bei 2500 UPm gerührt. 'Mit der gerührten Streichfarbe wird danach sofort ein tarierter Messkolben bis zur Kalibrationsmarke aufgefüllt und durch Wägung das Gewicht bestimmt. Das Gewicht ist abhängig vom Anteil der eingerührten Luft und ist somit ein Maß für die Effektivität des geprüften Antischaummittels. Der Gehalt an Luft kann anhand nachstehender Formel berechnet werden.

$$\text{Vol.-\% Luft} = 100 - (g*2)/D$$

g = Gewicht von 50 ml gerührter Streichfarbe
D = Dichte der luftfreien Streichfarbe

Zur Überprüfung der Verträglichkeit wird die mit Entschäumer versetzte Dispersion auf eine PE-Folie aufgerakelt. Nach dem Trocknen der Beschichtung wird diese dann optisch beurteilt (Tabelle 6).

Tabelle 6

| | 2 Stunden nach Einarbeitung des Entschäumers | | 2 Wochen Lagerung bei RT nach Einarbeitung des Entschäumers | |
|---|---|---|---|---|
| | Vol- % Luft | Aufzug | Vol.- % Luft | Aufzug |
| ohne Entschäumer | 13,5 | Schaumblasen | 13,8 | Schaumblasen |
| Beispiel E 1 (nicht erfindungsgemäß) | 3,2 | schwache Benetzungsstörungen | 12,7 | Schaumblasen |
| Beispiel E 2 | 3,1 | keine Benetzungsstörungen | 4,3 | keine Benetzungsstörungen |
| Beispiel E 3 | 2,8 | schwache Benetzungsstörungen | 3,7 | keine Benetzungsstörungen |
| Beispiel E 4 | 2,9 | schwache Benetzungsstörungen | 3,2 | keine Benetzungsstörungen |

Prüfung der erfindungsgemäßen Produkte II

Zur Prüfung der entschäumenden Wirkung der erfindungsgemäßen Produkte im Vergleich zu Produkten des Standes der Technik werden ein sogenannter offenporiger Schaumrollentest und ein Rührtest durchgeführt.

Bei dem Schaumrollentest werden die zu prüfenden Produkte in eine Hochglanzdispersionsfarbe auf Basis einer Reinacrylatdispersion bzw. in Parkettlacke (1- bzw. 2-komponentig) eingearbeitet. Nach einer Reifezeit von 24 Stunden bei Raumtemperatur werden die in den Farben bzw. Lacken enthaltenen Entschäumeremulsionen auf ihre entschäumende Wirkung geprüft.

Dazu wird 40 g der Farbe (bei Parkettlack 15 g) auf eine lackierte Kontrastkarte (24 cm x 21 cm, schwarz/weiß) gegeben und mit der offenporigen Schaumrolle (bei Parkettlack mit einer Mohairrolle) gleichmäßig verteilt. Nach einer Trockenzeit von 24 Stunden bei Raumtemperatur der Farbe bzw. der Lacke wird die Oberfläche des Farbanstriches auf Schaumblasen und Störungen (Benetzungsfehler) optisch beurteilt. Danach werden die Ergebnisse nach einem Notensystem (von 1 für keine Schaumblasen und keine Benetzungsstörungen bis 5 für sehr viele Schaumblasen und sehr viele Benetzungsstörungen (Krater)) eingeteilt.

Zusätzlich wird mit dem Lack aus Rezeptur 3 ein Rührtest durchgeführt. Dieser Rührtest dient auch dazu, um die Produkte auf ihre entschäumende Wirkung zu prüfen. Dazu werden 50 g des Lackes in einen 180 ml PE-Becher eingewogen und bei 3000 U/min. mit einer Dispergierscheibe, d=30 mm, 3 Minuten lang gerührt. Unmittelbar nach Beendigung des Rührtestes werden 45 g des gerührten Lackes in einen Messzylinder geschüttet und das Volumen (plus Schaumhöhe) abgelesen. Je niedriger das Volumen bzw. die Schaumhöhe, desto effektiver der Entschäumer. Danach wird der Lack auf eine Polyesterfolie, welche wiederum an einer schräggestellten Wand befestig ist (25° abweichend von der Senkrechten), abgeschüttet. Während und nach der Trocknung des Lackes wird der Film auf Benetzungsstörungen beurteilt. Wie in der oben beschriebenen Beurteilung wird wiederum die Benetzungsstörung und auch der vorhandene Schaum nach Noten 1 bis 5 beurteilt (Tabellen 7 bis 10).

Tabelle 7

| Hochglanzdispersionsfarbe auf Basis Reinacrylat (Acronal DS 6250) | | | | | | | | |
|---|---|---|---|---|---|---|---|---|
| | | Optische Beurteilung der Farboberfläche auf Schaumblasen | | | | Optische Beurteilung der Farboberfläche auf Benetzungsstörung | | |
| Probenbezeichnung | Einsatzkonzentration | 24 h nach Herstellung der Farbe | nach Wärmelagerung der Farbe 2 Wochen bei 50°C | nach Wärmelagerung der Farbe 4 Wochen bei 50°C | | 24 h nach Herstellung der Farbe | nach Wärmelagerung der Farbe 2 Wochen bei 50° | nach Wärmelagerung der Farbe 4 Wochen bei 50°C |
| | | | | | | | | |
| Standard Entschäumeremulsion aus PES1 | 1 , 0 | 1 bis 2<br>ganz wenige kleine Schaumblasen | 3<br>viele große und kleine Schaumblasen | 5<br>sehr viele große und kleine Schaumblasen | | 1<br>keine Benetzungsstörung | 2<br>schwache Benetzungsstörung | 5<br>sehr starke Benetzungsstörung |
| | | | | | | | | |
| Erfindungsgemäße Entschäumeremulsion aus PES4 | 1, 0 % | 1<br>keine Schaumblasen | 1<br>keine Schaumblasen | 1 bis 2<br>ganz wenige kleine Krater | | 1<br>keine Benetzungsstörung | 1<br>keine Benetzungsstörung | 1 bis 2<br>ganz schwache Benetzungsstörung |

Tabelle 8

| Einkomponenten-Parkettlack auf Basis Polyurethan/Acrylatdispersion (Alberdingk CUR 99/Primal 3188) | | | | | | | | |
|---|---|---|---|---|---|---|---|---|
| | | Optische Beurteilung der Lackoberfläche auf Schaumblasen | | | | Optische Beurteilung der Lackoberfläche auf Benetzungsstörung | | |
| Probenbezeichnung | Einsatzkonzentration | 24 h nach Heistellung des Lackes | nach Wärmelagerung des Lackes 2 Wochen bei 50°C | nach Wärmelagerung des Lackes 4 Wochen bei 50°C: | | 24 h nach Herstellung des Lackes | nach Wärmelagerung des Lackes 2 Wochen bei 50°C | nach Wärmelagerung des Lackes 4 Wochen bei 50°C |
| | | | | | | | | |
| Standard Entschäumeremulsion aus PES1 | 1,0 - | 1 bis 2<br>ganz wenige kleine Schaumblasen | 2<br>große und kleine Schaumblasen | 4<br>viele große und kleine Schaumblasen | | 1<br>keine Benetzungsstorung | 2<br>schwache Benetzungsstörung | 4<br>starke Benetzungsstörung |
| | | | | | | | | |
| Erfindungsgemäße Entschäumeremulsion aus PES4 | 1,0 % | 1<br>keine Schaumblasen | 1<br>keine Schaumblasen | 1 bis 2<br>ganz wenige kleine Krater | | 1<br>keine Benetzungsstörung | 1<br>keine Benetzungsstörung | 2<br>Orangenschalenhaut |

Tabelle 9

| Wässriger Zweikomponenten-Parkettlack auf Basis Acrylat/Isocyanat (Luhydran N 850 S / Bayhydur VP LS 2336) | | | | | | | | |
|---|---|---|---|---|---|---|---|---|
| | | Optische Beurteilung der Lackoberfläche auf Schaumblasen | | | | Optische Beurteilung der Lackoberfläche auf Benetzungsstörung | | |
| Probenbe-Zeichnung | Einsatzkonzentration | 24 h nach Herstellung des Lackes | nach Wärmelagerung des Lackes 2 Wochen bei 50°C | nach Wärmelagerung des Lackes 4 Wochen bei 50°C | | 24 h nach Herstellung des Lackes | nach Wärmelagerung des Lackes 2 Wochen bei 50°C | nach Märmelagerung des Lackes 4 Wochen bei 50°C |
| | | | | | | | | |
| Standard Entschäumeremulsion aus PES1 | 1,0 % | 1 bis 2 ganz wenige kleine Schaumblasen | 2 große und kleine Schaumblasen | 4 viele große und kleine Schaumblasen | | 1 keine Benetzungsstörung | 2 schwache Benetzungsstorung | 4 starke Benetzungsstörung |
| | | | | | | | | |
| Erfindungsgemäße Entschäumeremulsion aus PES4 | 1,0 % | 1 keine Schaumblasen | 1 keine Schaumblasen | 1 bis 2 ganz wenige kleine Krater | | 1 keine Benetzungstörung | 1 keine Benetzungsstörung | 2 Orangen schalenhaut |

Tabelle 10

| Wässriger Zweikomponenten-Parkettlack auf Basis Acrylat/Isocyanat (Luhydran N 850 S / Bayhydur VP LS 2336) | | | | | | | | |
|---|---|---|---|---|---|---|---|---|
| | | Entschäumerwirksamkeit nach der Rührtestmethode | | | | Optische Beurteilung der Lackoberfläche auf Benetzungsstorung | | |
| Probenbezeichnung | Einsatzkonzentration | 24 h nach Herstellung des Lackes | nach Wärmelagerung des Lackes 2 Wochen bei 50°C | nach Wärmelagerung des Lackes 4 Wochen bei 50°C | | 24 h nach Herstellung des Lackes | nach Wärmelagerung des Lackes 2 Wochen bei 50°C | nach Wärmelagerung des Lackes 4 Wochen bei 50°C |
| | | | | | | | | |
| Standard Entschäumeremulsion aus PES1 | 1,0 - | 51 ml/g | 55 ml/g | 63 ml/g | | 1 keine Benetzungstörung | 2 schwache Benetzungsstörung | 4 starke Benetzungsstörung |
| | | | | | | | | |
| Erfindungsgemäße Entschäumeremulsion aus PES4 | 1,0 - | 50 ml/g | 51 ml/g | 53 ml/g | | 1 keine Benetzungsstörung | 1 keine Benetzungsstörung | 2 Orangen schalenhaut |

Verwendete Rezepturen

Hochglanzdispersionsfarbe auf Basis Reinacrylat (Acronal DS 6250)

Teil 1:

| | |
|---|---|
| Wasser | 41 g |
| Pigmentverteiler MD 20 | 20 g<br>(BASF AG, 67056 Ludwigshafen) |
| Collacral LR 8954 | 15 g<br>(BASF AG, 67056 Ludwigshafen) |
| Parmetol A 26 | 2 g<br>(Schülke und Mayr GmbH, 22840 Norderstedt) |
| ViscoPlus 3030 | 15 g<br>(TEGO Chemie Service GmbH, 45127 Essen) |
| Collacral LR 8989, 5%ige | 15 g<br>(BASF AG, 67056 Ludwigshafen) |
| Titandioxid CR 828 | 225 g<br>(Kerr - Mc Gee Gigments AG, 47829 Krefeld) |

gut dispergieren.

Teil 2:

| | |
|---|---|
| Lusolvan FBH | 15 g<br>(BASF AG, 67056 Ludwigshafen) |
| Solvenon DPM | 17 g<br>(Dow Chemical Company, 65824 Schwalbach) |
| Optigel S 482, 25%ig | 6 g<br>(Südchemie AG, 85368 Moosburg) |
| Acronal DS 6250 | 570 g<br>(BASF AG, 67056 Ludwigshafen) |
| Wasser | 51 g |

Teil 2 vorlegen und Teil 1 unter Rühren zugeben.

Einkomponenten-Parkettlack auf Basis Polyurethan / Acrylatdispersion (Alberdingk CUR 99/Primal 3188)

Alle Komponenten unter Rühren zusammengeben.

| | |
|---|---|
| Prima 3188 | 506 g<br>(Rohm and Hass S.A., 60489 Frankfurt) |
| Alberdingk CUR 99 | 255 g<br>(Alberdingk Boley GmbH, 47829 Krefeld) |
| Wasser | 78 g |
| Butylglykol | 40 g |
| Dowanol DPnB | 12 g<br>(Dow Chemical Company, 65824 Schwalbach) |
| Acrysol RM 8 | 05 g<br>(Rohm and Hass S.A., 60489 Frankfurt) |
| Aquacer 513 | 40 g<br>(Byk Cera GmbH, 46462 Wesel) |
| Wasser | 64 g |

Wässriger Zweikomponenten-Parkettlack auf Basis Acrylat / Isocyanat (Luhydran N 850 S / Bayhydur VP LS 2336)

Teil 1:

| | |
|---|---|
| Dowanol DPnB | 40 g |
| | (Dow Chemical Company, 65824 Schwalbach) |
| Propylenglykol | 20 g |
| Deuteron MK | 20 g |
| | (Deuteron GmbH, 28832 Achim) |
| Butyldigykol | 80 g |
| Wasser | 40 g |

gut dispergieren.

Teil 2:

| | |
|---|---|
| Luhydran N 850 S | 1450g |
| | (BASF AG, 67056 Ludwigshafen) |
| Poligen WE 1 | 80g |
| | (BASF AG, 67056 Ludwigshafen) |
| Wasser | 160g |
| Schwego Pur 8020 | 40 g |
| | (Schwegmann GmbH, 53501 Grafschaft Gelsdorf) |

Teil 2 vorlegen und Teil 1 unter Rühren zugeben.

Härterkomponente

| | |
|---|---|
| Bayhydur VPLS 2336 | 65 g |
| | (Bayer MaterialScience AG, 51368 Leverkusen) |
| Proglyde DMPA | 35 g |
| | (Dow Chemical Company, 65824 Schwalbach) |

## Patentansprüche

**1.** Verfahren zur Herstellung von Polyoxyalkylen-Polysiloxan-Blockpolymerisaten der allgemeinen Formel (I)

$$C\text{-}B\text{-}(AB)_a\text{-}C^1 \qquad (I)$$

worin bedeuten

A = ein Polyoxyalkylenblock der allgemeinen Formel - $(C_nH_{2n}O)_b$-,
B = ein Polysiloxanblock der allgemeinen Formel - $(SiR_2\text{-}O)_c$-,
C,$C^1$= gleiche oder verschiedene Alkoxypolyoxyalkylenreste der allgemeinen Formel Z-O-$[CH_2\text{-}CH(R^1)O]_d$-,
R = gleiche oder verschiedene $C_{1\text{-}4}$-Alkylreste oder Phenylreste mit der Maßgabe, dass mindestens 90 % der Reste R Methylreste sind,
$R^1$ = gleiche oder verschiedene Wasserstoff-, $C_{1\text{-}12}$-Alkylreste oder Phenylreste,
Z = ein Alkyl-, Alkylen-, Aryl- oder Alkylarylrest,
a = 1 bis 20,
b = einen mittleren Wert von 10 bis 130,
c = 3 bis 100,
d = unabhängig voneinander in C/$C^1$ Werte von 2 bis 20 mit der Maßgabe, dass der Mittelwert im Bereich 2 bis

< 15 liegt,
$n$ = 2 bis 12 mit einem mittleren Zahlenwert von 2,7 bis 4,0

durch Umsetzung von

A) Polyoxyalkylenalkoholen der allgemeinen Formel $R^2-[O-(C_nH_{2n}O)_b-H]_e$, worin $R^2$ ein e-wertiger Kohlenwasserstoffrest und e 2 bis 6 sein kann, mit
B) Polysiloxanen der allgemeinen Formel $Cl-(R)_2-Si-(SiR_2-O)-Si(R)_2-Cl$
**dadurch gekennzeichnet, dass**
C) Polyoxyalkylenalkohole der allgemeinen Formel $Z-O-[CH_2-CH(R^1)O]_d-H$ zur Regulierung des Molgewichtes mitverwendet werden.

**2.** Polyoxyalkylen-Polysiloxan-Blockpolymerisate der allgemeinen Formel (I)

$$C-B-(AB)_a-C^1 \qquad (I)$$

worin bedeuten

A = ein Polyoxyalkylenblock der allgemeinen Formel $-(C_nH_{2n}O)_b-$,
B = ein Polysiloxanblock der allgemeinen Formel $-(SiR_2-O)_c-$,
$C,C^1$= gleiche oder verschiedene Alkoxypolyoxyalkylenreste der allgemeinen Formel $Z-O-[CH_2-CH(R^1)O]_d,-$,
R = gleiche oder verschiedene $C_{1-4}$-Alkylreste oder Phenylreste mit der Maßgabe, dass mindestens 90 % der Reste R Methylreste sind,
$R^1$ = gleiche oder verschiedene Wasserstoff-, $C_{1-12}$-Alkylreste oder Phenylreste,
Z = ein Alkyl-, Alkylen-, Aryl- oder Alkylarylrest,
a = 1 bis 20,
b = einen mittleren Wert von 10 bis 130,
c = 3 bis 100,
d = unabhängig voneinander in $C/C^1$ Werte von 2 bis 20 mit der Maßgabe, dass der Mittelwert im Bereich 2 bis < 15 liegt,
n = 2 bis 12 mit einem mittleren Zahlenwert von 2,7 bis 4,0.

**3.** Verwendung von Polyoxyalkylen-Polysiloxan-Blockpolymerisaten der allgemeinen Formel (I)

$$C-B- (AB)_3-C^1 \qquad (I)$$

worin bedeuten

A = ein Polyoxyalkylenblock der allgemeinen Formel $- (C_nH_{2n}O)_b-$ ,
B = ein Polysiloxanblock der allgemeinen Formel $- (SiR_2-O)_c-$,
$C,C^1$= gleiche oder verschiedene Alkoxypolyoxyalkylenreste der allgemeinen Formel $Z-O-[CH_2-CH(R^1)O]_d-$,
R = gleiche oder verschiedene $C_{1-4}$-Alkylreste oder Phenylreste mit der Maßgabe, dass mindestens 90 % der Reste R Methylreste sind,
$R^1$ = gleiche oder verschiedene Wasserstoff-, $C_{1-12}$-Alkylreste oder Phenylreste,
Z = ein Alkyl-, Alkylen-, Aryl- oder Alkylarylrest,
a = 1 bis 20,
b = einen mittleren Wert von 10 bis 130,
c = 3 bis 100,
d = unabhängig voneinander in $C/C^1$ Werte von 2 bis 20 mit der Maßgabe, dass der Mittelwert im Bereich 2 bis < 15 liegt,
n = 2 bis 12 mit einem mittleren Zahlenwert von 2,7 bis 4,0

zur Entschäumung von wässrigen Dispersionen.

## Claims

**1.** Process for preparing polyoxyalkylene-polysiloxane block polymers of the general formula (I)

$$C\text{-}B\text{-}(AB)_a\text{-}C^1 \quad (I)$$

in which

A is a polyoxyalkylene block of the general formula $-(C_nH_{2n}O)_b-$,
B is a polysiloxane block of the general formula $-(SiR_2-O)_c-$,
C and $C^1$ are identical or different alkoxypolyoxyalkylene radicals of the general formula 2-O-$[CH_2-CH(R^1)O]_d-$,
R are identical or different $C_{1-4}$ alkyl radicals or phenyl radicals, with the proviso that at least 90% of the radicals R are methyl radicals,
$R^1$ are identical or different hydrogen, $C_{1-12}$ alkyl radicals or phenyl radicals,
Z is an alkyl, alkylene, aryl or alkylaryl radical,
a is 1 to 20,
b is an average value from 10 to 130,
c is 3 to 100,
d is independently at each occurrence in C/$C^1$ values from 2 to 20, with the proviso that the average value is situated in the range 2 to < 15,
n is 2 to 12, with an average numerical value of 2.7 to 4.0,

by reacting

A) polyoxyalkylene alcohols of the general formula $R^2-[O-(C_nH_{2n}O)_b-H]_e$, in which $R^2$ can be an e-valent hydrocarbon radical and e can be 2 to 6, with
B) polysiloxanes of the general formula $Cl-(R)_2-Si-(SiR_2-O)_c-Si(R)_2-Cl$,
**characterized in that**
C) polyoxyalkylene alcohols of the general formula Z-O-$[CH_2-CH(R^1)O]_d-H$ are also used to regulate the molar weight.

**2.** Polyoxyalkylene-polysiloxane block polymers of the general formula (I)

$$C\text{-}B\text{-}(AB)_a\text{-}C^1 \quad (I)$$

in which

A is a polyoxyalkylene block of the general formula - $(C_nH_{2n}O)_b-$,
B is a polysiloxane block of the general formula $-(SiR_2-O)_c-$,
C and $C^1$ are identical or different alkoxypolyoxyalkylene radicals of the general formula 2-O-$[CH_2-CH(R^1)O]_d-$,
R are identical or different $C_{1-4}$ alkyl radicals or phenyl radicals, with the proviso that at least 90% of the radicals R are methyl radicals,
$R^1$ are identical or different hydrogen, $C_{1-12}$ alkyl radicals or phenyl radicals,
Z is an alkyl, alkylene, aryl or alkylaryl radical,
a is 1 to 20,
b is an average value from 10 to 130,
c is 3 to 100,
d is independently at each occurrence in C/$C^1$ values from 2 to 20, with the proviso that the average value is situated in the range 2 to < 15,
n is 2 to 12, with an average numerical value of 2.7 to 4.0.

**3.** Use of polyoxyalkylene-polysiloxane block polymers of the general formula (I)

$$C\text{-}B\text{-}(AB)_a\text{-}C^1 \quad (I)$$

in which

A is a polyoxyalkylene block of the general formula - $(C_nH_{2n}O)_b-$,
B is a polysiloxane block of the general formula $-(SiR_2-O)_c-$,
C and $C^1$ are identical or different alkoxypolyoxyalkylene radicals of the general formula Z-O-$[CH_2-CH(R^1)O]_d-$,
R are identical or different $C_{1-4}$ alkyl radicals or phenyl radicals, with the proviso that at least 90% of the radicals

R are methyl radicals,
$R^1$ are identical or different hydrogen, $C_{1-12}$ alkyl radicals or phenyl radicals,
Z is an alkyl, alkylene, aryl or alkylaryl radical,
a is 1 to 20,
b is an average value from 10 to 130,
c is 3 to 100,
d is independently at each occurrence in C/$C^1$ values from 2 to 20, with the proviso that the average value is situated in the range 2 to < 15,
n is 2 to 12, with an average numerical value of 2.7 to 4.0,

for defoaming aqueous dispersions.

## Revendications

1. Procédé de fabrication de polymères séquencés polyoxyalkylène-polysiloxane de formule générale (I)

$$C\text{-}B\text{-}(AB)_a\text{-}C^1 \qquad (I)$$

dans laquelle

A = une séquence polyoxyalkylène de formule générale - $(C_nH_{2n}O)_b$-,
B = une séquence polysiloxane de formule générale - $(SiR_2\text{-}O)_c$-,
C, $C^1$ = des radicaux alcoxypolyoxyalkylène identiques ou différents de formule générale Z-O-$[CH_2\text{-}CH(R^1)O]_d$-,
R = des radicaux alkyle en $C_{1-4}$ ou des radicaux phényle identiques ou différents, à condition qu'au moins 90 % des radicaux R soient des radicaux méthyle,
$R^1$ = des radicaux hydrogène, alkyle en $C_{1-12}$ ou des radicaux phényle identiques ou différents,
Z = un radical alkyle, alkylène, aryle ou alkylaryle,
a = 1 à 20,
b = une valeur moyenne de 10 à 130,
c = 3 à 100,
d = indépendamment dans C/$C^1$ des valeurs de 2 à 20, à condition que la valeur moyenne se situe dans la plage allant de 2 à < 15,
n = 2 à 12 avec une valeur numérique moyenne de 2,7 à 4, 0

par mise en réaction de

A) des polyoxyalkylène-alcools de formule générale $R^2$-[O-$(C_nH_{2n}O)_b$-H$]_e$, dans laquelle $R^2$ peut être un radical hydrocarboné e-valent et e peut être de 2 à 6, avec
B) des polysiloxanes de formule générale Cl-$(R)_2$-Si-$(SiR_2\text{-}O)_c$-Si$(R)_2$-Cl,
**caractérisé en ce que**
C) des polyoxyalkylène-alcools de formule générale Z-O-$[CH_2\text{-}CH(R^2)O]_d$-H sont utilisés pour la régulation du poids moléculaire.

2. Polymères séquencés polyoxyalkylène-polysiloxane de formule générale (I)

$$C\text{-}B\text{-}(AB)_a\text{-}C^1 \qquad (I)$$

dans laquelle

A = une séquence polyoxyalkylène de formule générale - $(C_nH_{2n}O)_b$-,
B = une séquence polysiloxane de formule générale - $(SiR_2\text{-}O)_c$-,
C, $C^1$ = des radicaux alcoxypolyoxyalkylène identiques ou différents de formule générale Z-O-$[CH_2\text{-}CH(R^1)O]_d$-,
R = des radicaux alkyle en $C_{1-4}$ ou des radicaux phényle identiques ou différents, à condition qu'au moins 90 % des radicaux R soient des radicaux méthyle,
$R^1$ = des radicaux hydrogène, alkyle en $C_{1-12}$ ou des radicaux phényle identiques ou différents,
Z = un radical alkyle, alkylène, aryle ou alkylaryle,
a = 1 à 20,

b = une valeur moyenne de 10 à 130,
c = 3 à 100,
d = indépendamment dans C/$C^1$ des valeurs de 2 à 20, à condition que la valeur moyenne se situe dans la plage allant de 2 à < 15,
n = 2 à 12 avec une valeur numérique moyenne de 2,7 à 4,0.

**3.** Utilisation de polymères séquencés polyoxyalkylène-polysiloxane de formule générale (I)

$$C\text{-}B\text{-}(AB)_a\text{-}C^1 \qquad (I)$$

dans laquelle

A = une séquence polyoxyalkylène de formule générale - $(C_nH_{2n}O)_b$-,
B = une séquence polysiloxane de formule générale - $(SiR_2\text{-}O)_c$-,
C, $C^1$ = des radicaux alcoxypolyoxyalkylène identiques ou différents de formule générale Z-O-$[CH_2\text{-}CH(R^1)O]_d$-,
R = des radicaux alkyle en $C_{1-4}$ ou des radicaux phényle identiques ou différents, à condition qu'au moins 90 % des radicaux R soient des radicaux méthyle,
$R^1$ = des radicaux hydrogène, alkyle en $C_{1-12}$ ou des radicaux phényle identiques ou différents,
Z = un radical alkyle, alkylène, aryle ou alkylaryle,
a = 1 à 20,
b = une valeur moyenne de 10 à 130,
c = 3 à 100,
d = indépendamment dans C/$C^1$ des valeurs de 2 à 20, à condition que la valeur moyenne se situe dans la plage allant de 2 à < 15,
n = 2 à 12 avec une valeur numérique moyenne de 2,7 à 4,0,

pour le démoussage de dispersions aqueuses.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1012602
- DE 2443853
- US 4028218 A
- DE 3123103
- DE 3807247